# EUROPEAN PATENT SPECIFICATION

(11) **EP 1 434 399 B1**
(45) Date of publication and mention of the grant of the patent: **13.06.2012**
(21) Application number: 03300259.3
(22) Date of filing: 11.12.2003
(51) Int. Cl.: H04L 12/56

(54) **Efficient per-queue backpressure signaling**
Effiziente Warteschlangengegendruckregelsignalisierung
Signalisation efficace pour méchanisme de contrepression par file d'attente

(30) Priority: 23.12.2002 US 326259
(43) Date of publication of application: 30.06.2004
(73) Proprietor: Alcatel Lucent, 75007 Paris (FR)
(72) Inventor: Friesen, Larry, Nepean Ontario K2G 6P2 (CA); Johnson, Robert John, Ottawa Ontario K2H 6Y5 (CA); Du, Bin, Ottawa Ontario K2K 4X3 (CA); Pike, Dion, Dunrobin Ontario K0A 1T0 (CA); Sterne, Jason, Ottawa Ontario K2G 5N3 (CA)
(74) Representative: Nicolle, Olivier

(56) References cited:
- CAM R ET AL: "SYSTEM PACKET INTERFACE LEVEL 4 (SPI-4) PHASE 2:OC-192 SYSTEM INTERFACE FOR PHYSICAL AND LINK LAYER DEVICES" OPTICAL INTERNETWORKING FORUM, January 2001 (2001-01), pages 1-64, XP002299896
- "SPI-4 Phase 2 Performance in Gigabit Ethernet Media Access Controllers" INTEL APPLICATION NOTE, 24 April 2002 (2002-04-24), pages 1-17, XP002299897

## Description

### Field of the Invention

This invention relates to an improved method of signaling a backpressure condition on a per-queue basis in a switch and an arrangement for carrying out the method through a pin-efficient high-speed interface between the switch fabric and a network processor or other packet-processing chip.

### Background Information

A switch fabric can be connected to a network processor through a high-speed fabric interface containing FPGA's (Field Programmable Gate Arrays) and ASIC's (Application Specific Integrated Circuits). This fabric interface must be simple to implement and for reliable operation should use as few interface pins as possible. When a queue in the switch fabric becomes congested, a mechanism is required to signal the backpressure condition, indicating the congested queue to the network processor or packet-processing chip. Although backpressure signaling mechanisms are known in prior art, they are not sufficiently pin-efficient to meet the requirements of a high-speed interface, such as the 7670 RSP (a multiprotocol routing switch platform (RSP) designed to be the basis of next generation networks).

Three types of interface between the switch fabric and the network processor exist in prior art.

Firstly, a proprietary high speed interface, the SQULB (sequential quad utopia-3 like bus) interface, is used to provide data path and per-queue backpressure signaling between the switch fabric and network processor. Requiring 132 data and 10 clock and control pins running at a rate to support an OC-192 application, the SQULB data interface has a high number of required pins. The interface between the network processor and the switch fabric is implemented across a high-speed midplane, which is simpler to implement and will operate more reliably with fewer interface pins. The SQULB data path can be serialized to reduce the number of pins across the midplane. Further information on the SQULB protocol can be found in U.S. Application US 2003/0103509 published the 5 june, 2003 and entitled "High Speed Sequenced MultiChannel Bus".

Secondly, the SPI 4.2 is a recently formalized standard for high-speed interfaces, including a lower pin count than the SQULB interface. The standard, which is defined by the "Implementation Agreement OIF-SPI4-02.0" by the Optical Internetworking Forum and "POS-PHY Level 4" by Saturn Group, provides for 16 data signals, one clock signal, and one control signal. As well, data rates of at least 832 Mbps are supported, which coincides with the rate required for the OC-192 POS system used in the 7670 RSP. The SPI 4.2 protocol has a backpressure signaling mechanism for the buffer that is receiving data via the SPI 4.2 link. However, this backpressure signaling mechanism cannot also be used for the required per-queue backpressure signaling because the mechanism would equally divide the bandwidth of the backpressure bus between the queues, rather than dynamically determining which queue is backed up. With a large number of queues this becomes inefficient and important backpressure information can be missed. As such, the backpressure signaling mechanism is only applicable to the buffer of the SPI 4.2 link.

The document "System Packet Interface Level 4", published in January 2001, at Optical internetworking forum, discloses a system interface for physical and link layer devices using the SPI-4 protocol.

The document "SPI-4 phase 2 performance in Gigabit Ethernet Media Access controllers", published by the Intel Application Notes, the 24 April 2002, discloses the specifications of SPI-4 protocol.

Finally, CSIX level 2 is a prior art standards proposal for interfacing a switch fabric to a network processor, such as those made by Intel and Agere. The CSIX level 2 provides a backpressure signaling mechanism that supports per-queue signaling and is operable at the 832 Mbps data rate required by the OC-192 POS feature in the 7670 RSP. Unfortunately, the CSIX level 2 data path requires 20 pins which is not pin-efficient enough to meet the requirements imposed by currently available FPGA's. There are no FPGA's available that support enough signals (20) per interface at the data rate needed (832Mbps). Furthermore, the CSIX level 2 is a new standard and is not yet available in commercial components.

Therefore, a more pin-efficient high-speed data path interface that supports per-queue backpressure signaling is required.

### SUMMARY OF THE INVENTION

The invention provides a means of indicating a congested queue in a switch fabric to a network processor or other packet-processing chip through use of a pin-efficient, high speed data path interface. The invention improves upon an industry standard protocol, the SPI 4.2 protocol, by making use of the CSIX level 2 standard proposal. This is advantageous because high-speed signaling pins are often at a premium in FPGA's.

In its method aspect, the invention is used in a high speed interface between a packet processor and a switch fabric. Data signals are transmitted over a maximum of 18 data paths and a backpressure signaling mechanism returns the backpressure condition signals over a maximum of 9 backpressure paths.

According to an aspect of the present invention, the backpressure condition is indicated on a per-input-queue basis. According to another aspect of the present invention, the backpressure condition is indicated on a per-output-queue basis. According to another aspect of the present invention, the backpressure condition is indicated on a per-data-stream basis. According to another aspect of the present invention, the backpressure condition is indicated on a per-guality-of-service-per-output-queue basis.

### BRIEF DESCRIPTION OF THE DRAWINGS

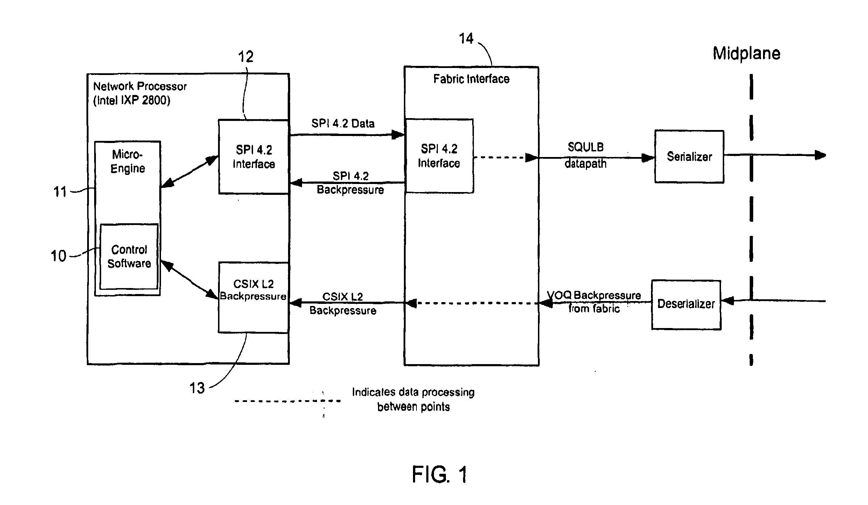

Fig. 1 is a block diagram of a data transmission system using the invention.

### DESCRIPTION OF THE PREFERRED EMBODIMENT

The invention relates to an improvement upon an industry standard protocol, the SPI 4.2 protocol, for high speed data transmission between switching system components by adding advanced functionality from a widely supported standards proposal, the CSIX level 2. In doing so, the invention offers a hybrid of the two interfaces that is more pin-efficient than either of them.

Referring to Fig. 1, a modification is made to the SPI 4.2 interface by using the SPI 4.2 protocol for the data path and the CSIX level 2 standard proposal for the per-queue backpressure signaling. The control software 10 for the network processor's micro- engine 11 provides the interworking required to effect the SPI 4.2 interface 12 with Virtual Output Queuing (VOQ) backpressure signaling received from the CSIX level 2 interface 13.

In one embodiment using the 7670 RSP routing switch platform, the network processor is an Intel IXP2800 and the fabric interface 14 is an FPGA from Altera. This FPGA has two receive (Rx) and two transmit (Tx) interfaces with eighteen signals per interface operating at a maximum rate of 832 Mbps. In this implementation, the data path, under the SPI 4.2 protocol, uses eighteen signals at 832 Mbps from one Rx interface. The backpressure signaling mechanism, under the CSIX level 2 standard proposal, uses 8 signals, 4 data and 4 control, at 832 Mbps from the one Tx interface and another control signal from the other Rx interface.

Thus, an improved method of signaling a back-pressure condition on a per-queue basis over a high-speed connection has been disclosed while remaining within the limitations of the currently available FPGA's. Advantages will lead to reduced system design and manufacturing costs as well as improved performance.

It will be clear to one skilled in the art that the invention is applicable to data queuing and flow control in the broadest sense. In particular, the queues in the fabric could be input queues, output queues or virtual output queues. Further, the backpressure based flow control signals could be associated with arbitrary streams of data that do not have a one-to-one association with a specific queuing structure.

## Claims

1. A high speed interface between a packet network processor (10, 11, 12, 13) and a switch fabric (14) capable of indicating a backpressure condition on a per-queue basis, the switch fabric (14) being connected to the packet network processor through the high speed interface containing a FPGA circuit and an ASIC circuit, the packet network processor having a data path using a SPI 4.2 protocol which specifies a limited number of data signals, clock signals and control signals, **characterized in that** the high speed interface comprising:
a data signal transmitter transmitting data signals, clock signals and control signals over a maximum of 18 data paths and a backpressure signaling mechanism returns the backpressure condition signals over a maximum of 9 backpressure paths, one in SPI 4.2 protocol and 8 in a CSIX protocol,
said backpressure signaling mechanism using said CSIX protocol which supports per-queue backpressure signaling using eight signals transmitted over the 8 backpressure paths, of which four are information signals and four are control signals, the CSIX protocol signals are added to the signal used for backpressure as defined under SPI 4.2 protocol,
said FPGA containing two receiver and two transmitter interfaces with eighteen signals per interface and,
a fabric interface with at least two transmit and two receive segments, each capable of providing up to a maximum of the total number of data signals, clock signals and control signals.

2. The interface of claim 1 wherein the backpressure condition is indicated on a per-input-queue basis.

3. The interface of claim 1 wherein the backpressure condition is indicated on a per-output-queue basis.

4. The interface of claim 1 wherein the backpressure condition is indicated on a per-virtual-output-queue basis.

5. A method of signaling a backpressure in a high speed interface between a packet network processor (10, 11, 12, 13) having a data path using a SPI 4.2 protocol and a switch fabric (14) operating under a protocol with a limited number of signals, the switch fabric being connected to the packet network processor through the high speed interface containing a FPGA circuit and an ASIC circuit, said method being **characterized in that** it comprises the steps of
transmitting data signals, clock signals and control signals over a maximum of 18 data paths and a backpressure signaling mechanism returns the backpressure condition signals over a maximum of 9 backpressure paths, one in SPI 4.2 protocol and 8 in a CSIX protocol, and
returning said backpressure condition signals using eight signals transmitted over the 8 backpressure paths, of which four are information signals and four are control signals, the CSIX protocol signals are added to the signal used for backpressure as defined under SPI 4.2 protocol, the FPGA containing two receiver and two transmitter interfaces with eighteen signals per interface for transmitting at least data signals, clock signals and control signals.

6. The method of claim 5 wherein the backpressure condition is indicated on a per-input-queue basis.

7. The method of claim 6 wherein the backpressure condition is indicated on a per-output-queue basis.

8. The method of claim 7 wherein the backpressure condition is indicated on a per-virtual-output-queue basis.

## Patentansprüche

1. Hochgeschwindigkeits-Schnittstelle zwischen einem Netzwerk-Paketprozessor (10, 11, 12, 13) und einer Switch-Fabric (14), welche fähig ist, einen Backpressure-Zustand auf einer Pro-Warteschlange-Basis anzuzeigen, wobei die Switch-Fabric (14) über die eine FPGA-Schaltung und eine ASIC-Schaltung umfassende Hochgeschwindigkeits-Schnittstelle an den Netzwerk-Paketprozessor angeschlossen ist, wobei der Netzwerk-Paketprozessor einen Datenpfad, der ein SPI 4.2-Protokoll verwendet, welches eine begrenzte Anzahl von Datensignalen, Taktsignalen und Steuersignalen spezifiziert, aufweist, **dadurch gekennzeichnet, dass** die Hochgeschwindigkeits-Schnittstelle umfasst:
Eine Datensignalübertragungsvorrichtung für die Übertragung von Datensignalen, Taktsignalen und Steuersignalen über eine maximale Anzahl von 18 Datenpfaden, und wobei ein Backpressure-Signalisierungsmechanismus die Backpressure-Zustandssignale über eine maximale Anzahl von 9 Backpressure-Pfaden, davon einer im SPI 4.2-Protokoll und 8 in einem CSIX-Protokoll, zurücksendet,
wobei der besagte Backpressure-Signalisierungsmechanismus das besagte CSIX-Protokoll, welches eine Pro-Warteschlange-Backpressure-Signalisierung unterstützt, unter Verwendung von acht über die 8 Backpressure-Pfade übertragenen Signalen, von denen vier Informationssignale und vier Steuersignale sind, verwendet, wobei die CSIX-Protokoll-Signale zu dem für Backpressure, wie unter dem SPI 4.2-Protokoll definiert, verwendeten Signal hinzugefügt werden,
wobei die besagte FPGA zwei Empfänger- und zwei Übertragungsvorrichtungsschnittstellen mit achtzehn Signalen pro Schnittstelle enthält, und
eine Fabric-Schnittstelle mit mindestens zwei Übertragungs- und zwei Empfangssegmenten, welche jeweils fähig sind, bis zu einer maximalen Anzahl der Gesamtanzahl von Datensignalen, Taktsignalen und Steuersignalen bereitzustellen.

2. Schnittstelle nach Anspruch 1, wobei der Backpressure-Zustand auf einer Pro-Eingangswarteschlange-Basis angezeigt wird.

3. Schnittstelle nach Anspruch 1, wobei der Backpressure-Zustand auf einer Pro-Ausgangswarteschlange-Basis angezeigt wird.

4. Schnittstelle nach Anspruch 1, wobei der Backpressure-Zustand auf einer Pro-Virtuelle-Ausgangswarteschlange-Basis angezeigt wird.

5. Verfahren zur Signalisierung von Backpressure in einer Hochgeschwindigkeits-Schnittstelle zwischen einem Netzwerk-Paketprozessor (10, 11, 12, 13) mit einem Datenpfad, welcher ein SPI 4.2-Protokoll verwendet, und einer Switch-Fabric (14), welche unter einem Protokoll mit einer begrenzten Anzahl von Signalen arbeitet, wobei die Switch-Fabric über die eine FPGA-Schaltung und eine ASIC-Schaltung umfassende Hochgeschwindigkeits-Schnittstelle an den Netzwerk-Paketprozessor angeschlossen ist, wobei das Verfahren **dadurch gekennzeichnet ist, dass** es die folgenden Schritte umfasst:
Übertragen von Datensignalen, Taktsignalen und Steuersignalen über eine maximale Anzahl von 18 Datenpfaden, und wobei ein Backpressure-Signalisierungsmechanismus die Backpressure-Zustandssignale über eine maximale Anzahl von 9 Backpressure-Pfaden, davon einer im SPI 4.2-Protokoll und 8 in einem CSIX-Protokoll, zurücksendet, und
Zurücksenden der besagten Backpressure-Zustandssignale unter Verwendung von acht über die 8 Backpressure-Pfade übertragenen Signalen, von denen vier Informationssignale und vier Steuersignale sind, wobei die CSIX-Protokoll-Signale zu dem für Backpressure, wie unter dem SPI 4.2-Protokoll definiert, verwendeten Signal hinzugefügt werden, wobei die FPGA zwei Empfänger- und zwei Übertragungsvorrichtungsschnittstellen mit achtzehn Signalen pro Schnittstelle für die Übertragung von zumindest Datensignalen, Taktsignalen und Steuersignalen enthält.

6. Verfahren nach Anspruch 5, wobei der Backpressure-Zustand auf einer Pro-Eingangswarteschlange-Basis angezeigt wird.

7. Verfahren nach Anspruch 6, wobei der Backpressure-Zustand auf einer Pro-Ausgangsschlange-Basis angezeigt wird.

8. Verfahren nach Anspruch 7, wobei der Backpressure-Zustand auf einer Pro-Virtuelle-Ausgangswarteschlange-Basis angezeigt wird.

## Revendications

1. Interface à grande vitesse entre un processeur de réseau de paquets (10, 11, 12, 13) et une matrice de commutation (14) pouvant indiquer une condition de contre-pression selon une file d'attente, la matrice de commutation (14) étant connectée au processeur de réseau de paquets par l'intermédiaire de l'interface à grande vitesse contenant un circuit FPGA et un circuit ASIC, le processeur de réseau de paquets présentant un chemin de données utilisant un protocole SPI 4.2 qui spécifie un nombre limité de signaux de données, de signaux d'horloge et de signaux de commande, **caractérisé en ce que** l'interface à grande vitesse comprend :
un émetteur de signaux de données transmettant des signaux de données, des signaux d'horloge et des signaux de commande sur 18 chemins de données maximum et un mécanisme de signalisation de contre-pression renvoie les signaux de condition de contre-pression sur 9 chemins de contre-pression maximum, un dans un protocole SPI 4.2 et 8 dans un protocole CSIX,
ledit mécanisme de signalisation de contre-pression utilisant ledit protocole CSIX qui prend en charge la signalisation de contre-pression selon une file d'attente en utilisant huit signaux transmis sur les 8 chemins de contre-pression, dont quatre sont des signaux d'informations et quatre sont des signaux de commande, les signaux de protocole CSIX sont ajoutés au signal utilisé pour la contre-pression comme cela est défini par le protocole SPI 4.2,
ledit FPGA contenant deux interfaces de réception et deux interfaces d'émission avec dix- huit signaux par interface et,
une interface de matrice avec au moins deux segments d'émission et deux segments de réception, chacun pouvant fournir jusqu'au nombre total maximum de signaux de données, de signaux d'horloge et de signaux de commande.

2. Interface selon la revendication 1 dans laquelle la condition de contre-pression est indiquée selon une file d'attente d'entrée.

3. Interface selon la revendication 1 dans laquelle la condition de contre-pression est indiquée selon une file d'attente de sortie.

4. Interface selon la revendication 1 dans laquelle la condition de contre-pression est indiquée selon une file d'attente de sortie virtuelle.

5. Procédé de signalisation d'une contre-pression dans une interface à grande vitesse entre un processeur de réseau de commutation par paquets (10, 11, 12, 13) présentant un chemin de données utilisant un protocole SPI 4.2 et une matrice de commutation (14) fonctionnant selon un protocole avec un nombre limité de signaux, la matrice de commutation étant connectée au processeur de réseau de commutation par paquets par l'intermédiaire de l'interface à grande vitesse contenant un circuit FPGA et un circuit ASIC, ledit procédé étant **caractérisé en ce qu'**il comprend les étapes suivantes :
transmettre des signaux de données, des signaux d'horloge et des signaux de commande sur 18 chemins de données maximum et un mécanisme de signalisation de contre-pression renvoie les signaux de condition de contre-pression sur 9 chemins de contre-pression maximum, un dans un protocole SPI 4.2 et 8 dans un protocole CSIX, et
renvoyer lesdits signaux de condition de contre-pression en utilisant huit signaux transmis sur les 8 chemins de contre-pression, dont quatre sont des signaux d'information et quatre sont des signaux de commande, les signaux de protocole CSIX sont ajoutés au signal utilisé pour la contre-pression comme cela est défini par le protocole SPI 4.2, le FPGA contenant deux interfaces de réception et deux interfaces d'émission avec dix-huit signaux par interface pour transmettre au moins des signaux de données, des signaux d'horloge et des signaux de commande.

6. Procédé selon la revendication 5 dans lequel la condition de contre-pression est indiquée selon une file d'attente d'entrée.

7. Procédé selon la revendication 6 dans lequel la condition de contre-pression est indiquée selon une file d'attente de sortie.

8. Procédé selon la revendication 7 dans lequel la condition de contre-pression est indiquée selon une file d'attente de sortie virtuelle.
